(19) **Europäisches Patentamt / European Patent Office / Office européen des brevets**

(11) **EP 2 458 020 B1**

(12) # EUROPEAN PATENT SPECIFICATION

(45) Date of publication and mention
of the grant of the patent:
**06.09.2017 Bulletin 2017/36**

(51) Int Cl.:
***C21B 13/10*** *(2006.01)*  ***C22B 1/16*** *(2006.01)*

(21) Application number: **10802287.2**

(86) International application number:
**PCT/JP2010/062254**

(22) Date of filing: **21.07.2010**

(87) International publication number:
**WO 2011/010667 (27.01.2011 Gazette 2011/04)**

(54) **CARBON COMPOSITE BRIQUETTE FOR PRODUCING REDUCED IRON AND METHOD FOR PRODUCING REDUCED IRON EMPLOYING THE SAME**

KOHLENSTOFFVERBUNDSTOFF-BRIKETT ZUR HERSTELLUNG VON REDUZIERTEM EISEN UND VERFAHREN ZUR HERSTELLUNG VON REDUZIERTEM EISEN DAMIT

BRIQUETTE COMPOSITE À BASE DE CARBONE POUR LA PRODUCTION DE FER RÉDUIT ET PROCÉDÉ POUR LA PRODUCTION DE FER RÉDUIT METTANT EN UVRE UNE TELLE BRIQUETTE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.07.2009 JP 2009169719**

(43) Date of publication of application:
**30.05.2012 Bulletin 2012/22**

(73) Proprietor: **Kabushiki Kaisha Kobe Seiko Sho Chuo-ku**
**Kobe-shi**
**Hyogo 651-8585 (JP)**

(72) Inventors:
• **SUGIYAMA,Takeski**
**HYOGO 651-8585 (JP)**

• **YOSHIDA,Shohei**
**HYOGO 651-8585 (JP)**
• **FUJITA,Kyoichiro**
**Hyogo 651-8585 (JP)**
• **MISAWA,Ryota**
**Hyogo 651-8585 (JP)**

(74) Representative: **Müller-Boré & Partner**
**Patentanwälte PartG mbB**
**Friedenheimer Brücke 21**
**80639 München (DE)**

(56) References cited:
EP-A1- 1 167 546      WO-A1-2009/035053
WO-A1-2009/081784   JP-A- 2000 034 526
JP-A- 2002 097 508    JP-A- 2006 283 136
JP-A- 2008 056 986    US-A1- 2005 061 207
US-A1- 2006 278 040

**Description**

The present invention relates to a carbon composite agglomerate used as a material for a moving hearth furnace for producing reduced iron, and a method for producing reduced iron using such a carbon composite agglomerate.

Various techniques for producing reduced iron by reducing carbon composite agglomerates through heating with a rotary hearth furnace have been proposed (for example, refer to Patent Literatures 1 to 3).

Such reduced iron produced is used as an iron material for a blast furnace, a converter, an electric furnace, or the like. The reduced iron is demanded to have a C content as high as possible for improving the energy efficiency of such a furnace and a strength as high as possible for not producing powder. As an indicator for evaluating the strength of reduced iron usable for such furnaces, crushing strength is generally used. In the case of a material for a blast furnace, as a desirable crushing strength for bearing handling from discharging from a rotary hearth furnace to charging into a blast furnace and the load pressure of charged materials in the blast furnace, 180 kgf/briquette (about 1760 N/briquette) or more is demanded. In the case of a material for a converter or an electric furnace, since it is not necessary to consider load pressure in such a furnace, a crushing strength smaller than that in the case of a raw material for a blast furnace will suffice. However, in view of using reduced iron in general-purpose applications, the establishment of a technique that achieves a C content as high as possible and a crushing strength of 180 kgf/briquette (about 1760 N/briquette) or more has been demanded.

EP 1 167 546 A1 discloses an operating method of a rotary hearth furnace for producing reduced iron in which a stuck substance stuck on the hearth surface is removed from the hearth surface to thereby prevent or reduce the wear of the knife edge of a screw of a discharge device, enabling continuous operation for a long period and achieving high availability factor. US 2006/0278040 A1 discloses a process for producing reduced metal, comprising mixing a carbonaceous material comprising a high-VM coal containing 35% or more by mass of volatile matter and a raw material to be reduced that comprises a metal oxide; molding the mixture at 2 t/cm$^2$ or more to form agglomerates with the carbonaceous material incorporated therein; and heating the agglomerates with the carbonaceous material incorporated therein in a rotary hearth furnace to reduce the agglomerates at high temperature.

   PTL 1: Japanese Unexamined Patent Application Publication No. 2004-269978
   PTL 2: Japanese Unexamined Patent Application Publication No. 2009-35820
   PTL 3: Japanese Unexamined Patent Application Publication No. 2009-52138

Accordingly, an object of the present invention is to provide a carbon composite agglomerate used as a material for a moving hearth furnace for producing reduced iron, the carbon composite agglomerate providing reduced iron having a sufficiently high carbon content and an increased crushing strength; and a method for producing reduced iron using such a carbon composite agglomerate.

An invention according to Claim 1 is a carbon composite agglomerate for producing reduced iron, the carbon composite agglomerate being used as a material for a moving hearth furnace for producing reduced iron, wherein, in the carbon composite agglomerate, a total content of $SiO_2$, $Al_2O_3$, CaO, and MgO is 7 to 15 mass%, a MgO content is 0.1 to 6 mass%, a mass ratio of $Al_2O_3/SiO_2$ is 0.34 to 0.52, a mass ratio of $CaO/SiO_2$ is 0.25 to 1.5, and a C content Xc is set with the following formula (1) such that 1 to 9 mass% of C remains in reduced iron produced from the carbon composite agglomerate:

$$Xc = XcT + XcR \qquad (1)$$

where XcT = (12/16) · Xo; XcT represents a theoretical C amount necessary for completely reducing iron oxide and zinc oxide in the carbon composite agglomerate to the metals; XcR represents the amount of C remaining in reduced iron when the iron oxide and zinc oxide have been completely reduced to the metals with the theoretical C amount XcT; and Xo represents the total amount of oxygen of iron oxide and oxygen of zinc oxide in the carbon composite agglomerate.

An invention according to Claim 2 is the carbon composite agglomerate for producing reduced iron according to Claim 1, having a porosity of 37.5% or less.

An invention according to Claim 3 is the carbon composite agglomerate for producing reduced iron according to Claim 1 or 2, wherein an average grain size d50 of a carbonaceous material in the carbon composite agglomerate measured by a laser diffraction scattering grain size distribution measurement method is 30 μm or less.

An invention according to Claim 4 is the carbon composite agglomerate for producing reduced iron according to any one of Claims 1 to 3, at least containing ironmaking dust.

An invention according to Claim 5 is a method for producing reduced iron by reducing the carbon composite agglomerate for producing reduced iron according to any one of Claims 1 to 4, through heating with a moving hearth furnace, wherein the moving hearth furnace is divided into a plurality of zones in a moving direction of a hearth and a final zone of the plurality of zones has an oxidizing atmosphere.

An invention according to Claim 6 is the method for producing reduced iron according to Claim 5, wherein the oxidizing atmosphere of the final zone has a gas oxidation degree OD of 1.0 or more, and

$$OD = (CO_2 + H_2O + 2O_2)/(CO_2 + H_2O + O_2 + CO + H_2)$$

[where a unit of $CO_2$, $H_2O$, $O_2$, $CO$, and $H_2$ is vol%].

According to the present invention, by making the slag component composition of a carbon composite agglomerate and the amount of C remaining in a reduced iron product obtained by reducing the carbon composite agglomerate be in specific ranges, reduced iron having a sufficiently high carbon content and an increased crushing strength can be produced.

[Fig. 1] Fig. 1 is a graph illustrating the influence of the slag component composition of carbon composite briquettes on the crushing strength of reduced iron.

[Fig. 2] Fig. 2 illustrates a $FeO$-$CaO$-$Al_2O_3$-$SiO_2$ phase diagram for explaining the relationship between the slag component of carbon composite briquettes and the liquidus temperature.

[Fig. 3] Fig. 3 illustrates a $MgO$-$CaO$-$Al_2O_3$-$SiO_2$ phase diagram for explaining the relationship between the slag component of carbon composite briquettes and the liquidus temperature.

[Fig. 4] Fig. 4(a) is a sectional view illustrating the internal structure of a carbon composite briquette reduced in a reducing atmosphere and Fig. 4(b) is a sectional view illustrating the internal structure of a carbon composite briquette reduced in an oxidizing atmosphere.

[Fig. 5] Fig. 5 is a graph illustrating the relationship between the C content of reduced iron and the crushing strength of reduced iron.

[Fig. 6] Fig. 6 is a graph illustrating the relationship between the porosity of carbon composite briquettes and the crushing strength of reduced iron.

[Fig. 7] Fig. 7 is a graph illustrating the grain size distribution of blast-furnace wet dust.

[Fig. 8] Fig. 8 illustrates blast-furnace wet dust observed with an electron microscope.

Hereinafter, the present invention will be described further in detail.

(Embodiment 1)

A feature of the present invention is to make the slag component composition and carbon content of carbon composite briquettes be in specific ranges. As a result, a reduced iron product that is more suitable as an iron material for a blast furnace, an electric furnace, a converter, or the like, has a sufficiently high carbon content, and has an increased crushing strength can be obtained.

In the carbon composite briquettes, the total content of $SiO_2$, $Al_2O_3$, $CaO$, and $MgO$ is 7 to 15 mass%; the MgO content is 0.1 to 6 mass%; the mass ratio of $Al_2O_3/SiO_2$ is 0.34 to 0.52; and the mass ratio of $CaO/SiO_2$ is 0.25 to 1.5 (preferably 0.25 to 1.0). In addition, the C content of the carbon composite briquettes is adjusted such that 1 to 9 mass% of C remains in a reduced iron product obtained by reducing the carbon composite briquettes.

Hereinafter, reasons for the numerical limitations on such parameters will be described.

<In carbon composite briquettes, total content of $SiO_2$, $Al_2O_3$, $CaO$, and $MgO$: 7 to 15 mass%>

The total content of $SiO_2$, $Al_2O_3$, $CaO$, and $MgO$ in carbon composite briquettes substantially equals to the slag component content of the carbon composite briquettes. When the slag component content of carbon composite briquettes is excessively low, the effect of promoting sintering of metallic iron by melting of the slag component is not provided. When the slag component content of carbon composite briquettes is excessively high, reduced iron obtained by reducing the carbon composite briquettes has an excessively high slag content, which inhibits the sintering reaction of metallic iron to decrease the strength of the reduced iron. In addition, the reduced iron has a low iron grade. The total content of $SiO_2$, $Al_2O_3$, $CaO$, and $MgO$ in carbon composite briquettes is in the range of 7 to 15 mass%.

Note that all the carbon composite briquettes used in heating reduction tests described below had a total content of $SiO_2$, $Al_2O_3$, $CaO$, and $MgO$ in the range of 7 to 15 mass%.

<MgO content: 0.1 to 6 mass%>

When the MgO content increases, the melting point of slag increases and the amount of slag melted decreases and hence the strength-development action for reduced iron described below is not sufficiently exhibited. Accordingly, the upper limit of the MgO content is defined as 6 mass%.

On the other hand, since ironmaking dust unavoidably contains the MgO component, the lower limit of the MgO content is defined as 0.1 mass%.

Note that all the carbon composite briquettes used in the heating reduction tests described below had a MgO content in the range of 0.1 to 6 mass%.

<Mass ratio of $Al_2O_3/SiO_2$: 0.34 to 0.52; and mass ratio of $CaO/SiO_2$: 0.25 to 1.5 (preferably 0.25 to 1.0)>

The inventors of the present invention first investigated the influence of the slag component composition on the crushing strength of a reduced iron product by performing the following heating reduction tests.

(Heating reduction tests of carbon composite agglomerates)

Blend materials having various slag component compositions were prepared by adjusting blending proportions of iron ore and an ironmaking dust mixture obtained by mixing ironmaking dusts including blast-furnace dust. The blend materials were formed into carbon composite briquettes having the shape of a pillow and a volume of 6 to 7 $cm^3$ with a twin-roll briquetting machine. The briquettes were dried with a dryer so as to have a water content of 1 mass% or less. Examples of the chemical composition of the dried briquettes (hereafter, referred to as "dry briquettes") are shown in Table 1. In the table, "T. C" represents the total carbon content; "T. Fe" represents the total iron content; "M. Fe" represents a metallic-iron content; "T. Fe" includes $Fe_2O_3$, FeO, and "M. Fe"; Na, K, and Pb are not present in the form of atoms, but are present in the form of oxides and the like.

[Table 1]

| Table 1 | | | | | | | | | (Unit: mass%) |
|---|---|---|---|---|---|---|---|---|---|
| | T. C | T. Fe | $Fe_2O_3$ | FeO | M. Fe | ZnO | Na | K | Pb |
| Dry briquettes A | 13.77 | 48.84 | 24.41 | 40.48 | 1.97 | 2.62 | 0.54 | 0.13 | 0.16 |
| Dry briquettes B | 15.68 | 43.51 | 59.95 | 1.81 | 0.17 | 2.62 | 0.044 | 0.065 | 0.01 |

About 44 g of the dry briquettes were placed on an alumina tray, inserted into a horizontal heating furnace heated at 1300°C and having an atmosphere in which one of the two gases of $N_2$ (100% by volume) and $CO_2/N_2$ (30%/70% by volume) was passed at a flow rate of 3 NL/min, held until the dry briquettes were reduced, subsequently cooled to room temperature in $N_2$ gas atmosphere, and taken out from the furnace. The reduced briquettes were subjected to the measurement of crushing strength. Since a predetermined amount of CO-containing gas is generated from briquettes during the reduction, the heating reduction test in which $N_2$ (100%) gas was passed to provide a reducing gas atmosphere around the briquettes simulates reduction conditions in a reducing atmosphere in an actual rotary hearth furnace; and the reduction test in which the $CO_2$-containing gas was passed to provide an oxidizing gas atmosphere around the briquettes simulates reduction conditions in the presence of combustion exhaust gas in an actual rotary hearth furnace.

(Results of heating reduction tests)

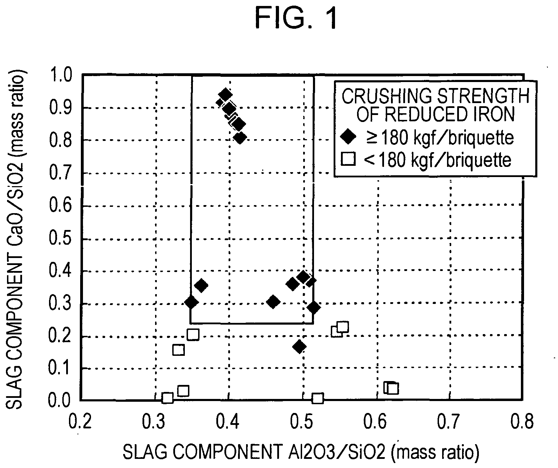

The measurement results are illustrated in Fig. 1. As illustrated in Fig. 1, the inventors have found that, by making the mass ratio of $Al_2O_3/SiO_2$ be in the range of 0.34 to 0.52 and the mass ratio of $CaO/SiO_2$ be in the range of 0.25 to 1.0, the crushing strength of reduced iron is further increased to 180 kgf/briquette (about 1760 N/briquette) or more.

The reason for which the crushing strength of reduced iron is thus increased by making the mass ratios of the slag component of carbon composite briquettes, that is, $CaO/SiO_2$ and $Al_2O_3/SiO_2$ be in the specific ranges is probably as follows.

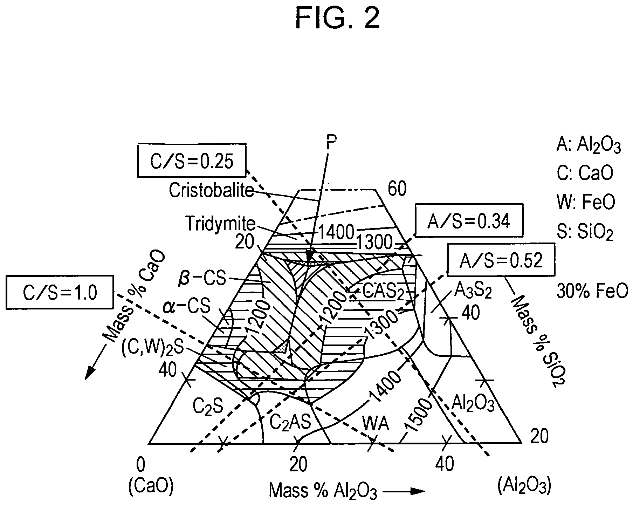

As illustrated in Fig. 2, when the specific ranges are plotted in the FeO (constant: 30 mass%)-CaO-$Al_2O_3$-$SiO_2$ phase diagram, the specific ranges are found to correspond to a region in which the liquidus temperature is a relatively low temperature of about 1200°C to 1300°C. Accordingly, the slag component (CaO, $Al_2O_3$, and $SiO_2$) reacts with wustite (FeO) that is generated during reduction from iron oxide to metallic iron or generated by reoxidation of metallic iron in an oxidizing atmosphere, to thereby have lower melting points; a portion of the reaction products melts to provide a solid-liquid coexistent state; and sintering of metallic iron is promoted.

As is clear from Fig. 2, the specific ranges correspond to a region that does not include the eutectic point P, which is a minimum melting point, and is located slightly away from the eutectic point P toward a high-temperature side. The reason for this is probably as follows. When the slag component of carbon composite briquettes is made to have a composition close to the eutectic point P in Fig. 2, the slag component reacts with wustite (FeO) and the entire amount of the slag component rapidly melts. Such rapid melting of the entire amount of the slag component results in the formation of a large number of cavities in the briquettes, which inhibits promotion of sintering of metallic iron. Thus, high strength is not achieved. In contrast, by making the slag component of carbon composite briquettes be in the specific ranges in Fig. 2, a solid-liquid coexistent state in which not the entire amount of but a portion of the slag component melts is achieved; as a result, the formation of cavities due to melting of slag is suppressed and sintering of metallic iron can be promoted. In summary, the strength development of reduced iron is achieved not by a slag phase but by the sinter structure of metallic iron.

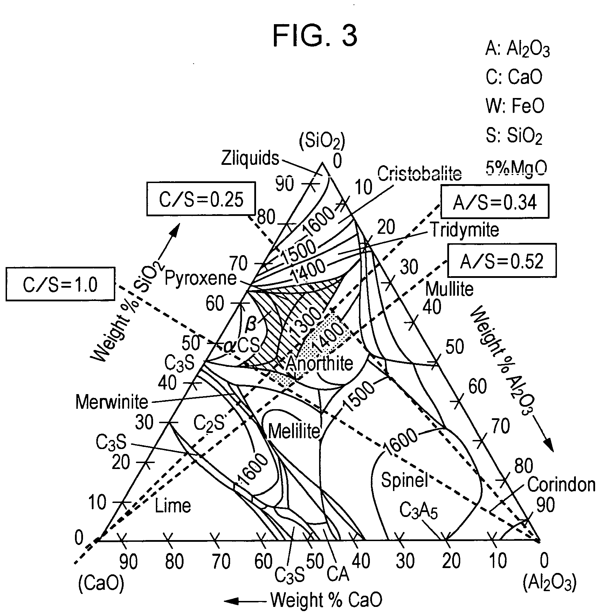

As illustrated in Fig. 3, when the specific ranges are plotted in the MgO (constant: 5 mass%)-CaO-$Al_2O_3$-$SiO_2$ phase diagram, the specific ranges are found to correspond to a region in which the liquidus temperature is about 1300°C to 1400°C. This liquidus temperature is about 100°C higher than that in the case in Fig. 2 where FeO is present. This shows that the presence of wustite (FeO) is desirable to facilitate melting of the slag component.

From the test results, $CaO/SiO_2$ of carbon composite briquettes is particularly preferably in the range of 0.25 to 1.0. However, even when an excessive amount of CaO is present in the carbon composite briquettes, a portion of CaO melts and $CaO/SiO_2$ of molten slag can satisfy the range of 0.25 to 1.0. Thus, sintering of metallic iron is promoted by the same action as that described above and the strength of reduced iron is developed. Accordingly, the range of $CaO/SiO_2$ is defined as the range of 0.25 to 1.5.

The composition of the slag component of carbon composite briquettes can be adjusted by, for example, adjusting blending proportions of a plurality of ironmaking dusts having different slag component compositions and iron ore, or adjusting the amount of CaO source added such as limestone or burnt lime.

<Amount of C remaining in reduced iron product obtained by reducing carbon composite briquettes: 1 to 9 mass%>

When the amount of C remaining in a reduced iron product obtained by reducing carbon composite briquettes is excessively small, in the case of using the reduced iron product as an iron material for a blast furnace, a converter, an electric furnace, or the like, the action of remaining carbon serving as a reductant for reducing unreduced iron oxide (FeO and the like) remaining in the reduced iron product is insufficient. In addition, the effect of increasing the melting speed of metallic iron due to carburization of metallic iron is not provided. On the other hand, when the amount of C remaining in a reduced iron product is excessively large, a large amount of carbon grains remaining in the reduced iron inhibit bonding between metallic iron grains and hence the strength of the reduced iron becomes insufficient. The amount of C remaining in a reduced iron product obtained by reducing carbon composite briquettes is in the range of 1 to 9 mass%.

Note that the C contents of all the reduced iron products obtained by reducing the carbon composite briquettes used in the heating reduction tests described above were in the range of 1 to 9 mass%.

The amount of C remaining in a reduced iron product can be adjusted by adjusting the amount of a carbonaceous material (carbon content) of carbon composite briquettes: for example, in the production of carbon composite briquettes, by adjusting the blending proportion of blast-furnace dust having a high carbon content or adjusting the amount of a carbonaceous material added such as coal or coke powder.

The carbon content Xc of carbon composite briquettes is set with the following formula (1).

$$Xc = XcT + XcR \cdots (1)$$

where $XcT = (12/16) \cdot Xo$; XcT represents a theoretical C amount necessary for completely reducing iron oxide and zinc oxide in the carbon composite briquettes to the metals; XcR represents the amount of C remaining in reduced iron when the iron oxide and zinc oxide have been completely reduced to the metals with the theoretical C amount XcT; and Xo represents the total amount of oxygen of iron oxide and oxygen of zinc oxide in the carbon composite briquettes.

In the formula (1), in addition to reduction of iron oxide, reduction of zinc oxide is considered. This is because, when ironmaking dust is used as a material, the ironmaking dust contains a relatively large amount of zinc oxide and reduction of the zinc oxide requires a relatively large amount of C. Compared with iron oxide and zinc oxide, the contents of oxides of other nonferrous metals such as lead and alkali metals are low and hence these oxides are not considered.

The theoretical C amount is defined on the premise that reduction of 1 mole of oxygen of iron oxide or zinc oxide requires 1 mole of carbon. However, in actual reduction of carbon composite briquettes with a moving hearth furnace, CO gas is generated by reduction (direct reduction) of iron oxide or zinc oxide with carbon and the CO gas causes reduction (gas reduction) of iron oxide or zinc oxide to proceed; accordingly, the amount of carbon required for reduction of 1 mole of oxygen of iron oxide or zinc oxide is less than 1 mole. On the other hand, since carbon composite briquettes are heated by combustion with burners in a moving hearth furnace, the combustion gas consumes a portion of a carbonaceous material (carbon) in the carbon composite briquettes and the portion is not used for reduction of iron oxide or zinc oxide. As a result, the decrease in the C consumption due to the gas reduction substantially cancels out the increase in the C consumption due to burner combustion gas. Accordingly, the theoretical C amount can be regarded as a C amount actually required for reduction.

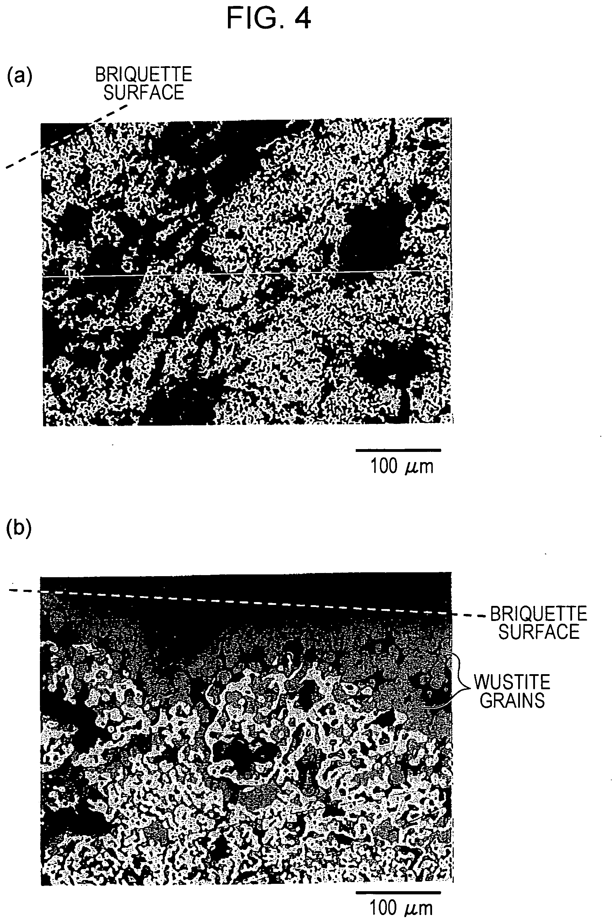

As described above, the presence of wustite (FeO) in carbon composite briquettes is desirable for facilitating melting of the slag component. Accordingly, in the production of reduced iron by reducing the carbon composite briquettes through heating with a moving hearth furnace such as a rotary hearth furnace, the rotary hearth furnace is divided into a plurality of zones in the moving direction of the hearth and the final zone of the plurality of zones has an oxidizing atmosphere. By making the final zone have an oxidizing atmosphere, as illustrated in Fig. 4(b), metallic iron in the near-surface regions of reduced iron obtained by reducing carbon composite briquettes is reoxidized to form wustite (FeO). As a result, melting of the slag component is facilitated and sintering of metallic iron is further promoted.

Fig. 4 shows comparison in terms of internal structure between the reduced iron obtained by reducing a carbon composite briquette in the reducing atmosphere (Fig. 4(a)) and the reduced iron obtained by reducing a carbon composite briquette in the oxidizing atmosphere (Fig. 4(b)) in the heating reduction tests. Bonding between metallic iron grains proceeds in both of the atmospheres; however, in the reduced iron obtained by reduction in the oxidizing atmosphere (Fig. 4(b)), molten wustite grains (gray) are present in the near-surface region of the briquette and the thickness of bonded metallic iron (white) becomes large. This shows that sintering of metallic iron has proceeded in the reduced iron obtained by reduction in the oxidizing atmosphere (Fig. 4(b)), compared with the reduced iron obtained by reduction in the reducing atmosphere (Fig. 4(a)). The reduced iron in Fig. 4(a) had a crushing strength of about 300 kgf/briquette (about 2940 N/briquette), whereas the reduced iron in Fig. 4(b) had a crushing strength of more than 600 kgf/briquette (about 5880 N/briquette).

Specifically, the final zone is preferably made to have an oxidizing atmosphere having a gas oxidation degree OD of 1.0 or more.

$$OD = (CO_2 + H_2O + 2O_2)/(CO_2 + H_2O + O_2 + CO + H_2)$$

[where the unit of $CO_2$, $H_2O$, $O_2$, $CO$, and $H_2$ is vol%].

Herein, the gas oxidation degree OD is defined as follows: $OD = (CO_2 + H_2O + 2O_2)/(CO_2 + H_2O + O_2 + CO + H_2)$ [where the unit of $CO_2$, $H_2O$, $O_2$, $CO$, and $H_2$ is vol%] because, when the atmosphere contains the $O_2$ component, the $O_2$ component has an oxidizing capability for metal elements that is twice that of the $CO_2$ component and the $H_2O$ component (for example, reaction formulae $Fe + CO_2 = FeO + CO$, $Fe + H_2O = FeO + H_2$, and $2Fe + O_2 = 2FeO$ show that 1 mole of $CO_2$ or $H_2O$ can oxidize 1 mole of Fe, whereas 1 mole of $O_2$ can oxidize 2 moles of Fe).

The gas oxidation degree of the atmosphere of the final zone can be adjusted by changing, for example, the air-fuel ratio of a burner.

(Embodiment 2)

The Embodiment 1 above describes an example in which the physical internal structure of the carbon composite briquettes is not particularly limited. As for the physical internal structure of carbon composite briquettes, in particular, by making the porosity of carbon composite briquettes be in a specific range, even when the amount of carbon remaining in a reduced iron product obtained by reducing the carbon composite briquettes is large, a sufficiently high crushing strength can be achieved with certainty.

Specifically, carbon composite briquettes having a porosity of 37.5% or less are preferably used.

Hereinafter, the reason for which the porosity of carbon composite briquettes is limited to 37.5% or less will be described.

The inventors of the present invention investigated the influence of various parameters on the crushing strength of reduced iron obtained by preparing carbon composite briquettes from ironmaking dust and reducing the carbon composite briquettes under the same test conditions as in Embodiment 1.

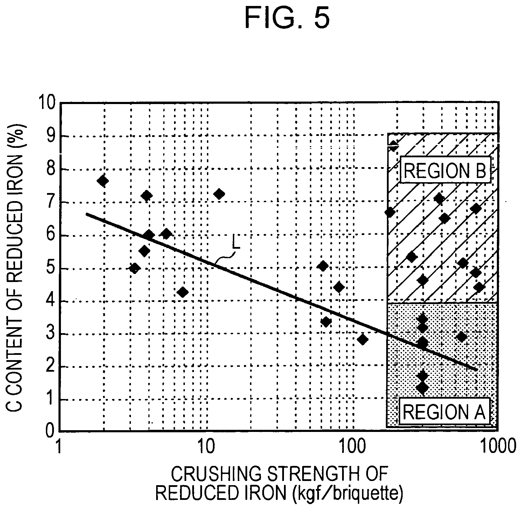

Fig. 5 illustrates the relationship between the C content of reduced iron and the crushing strength of reduced iron. As illustrated in Fig. 5, it has been found that reduced irons having a crushing strength of 180 kgf/briquette (about 1760 N/briquette) or more, which are more suitable as iron materials for a blast furnace and the like, are a reduced iron [region A] having a low C content (C: 1 mass% or more and less than 4 mass%) and a reduced iron [region B] having a high C content (C: 4 mass% or more). Herein, the reduced iron in the region A is an extension of common general technical knowledge (line L in the figure) in which the higher the C content of reduced iron, the lower the crushing strength of the reduced iron becomes. In contrast, the reduced iron in the region B is irrelevant to the common general technical knowledge and a high crushing strength is achieved in spite of a high C content.

The inventors studied the reason why a high crushing strength is achieved in spite of a high C content and, as a result, have found that the porosity of carbon composite briquettes to be reduced influences the crushing strength.

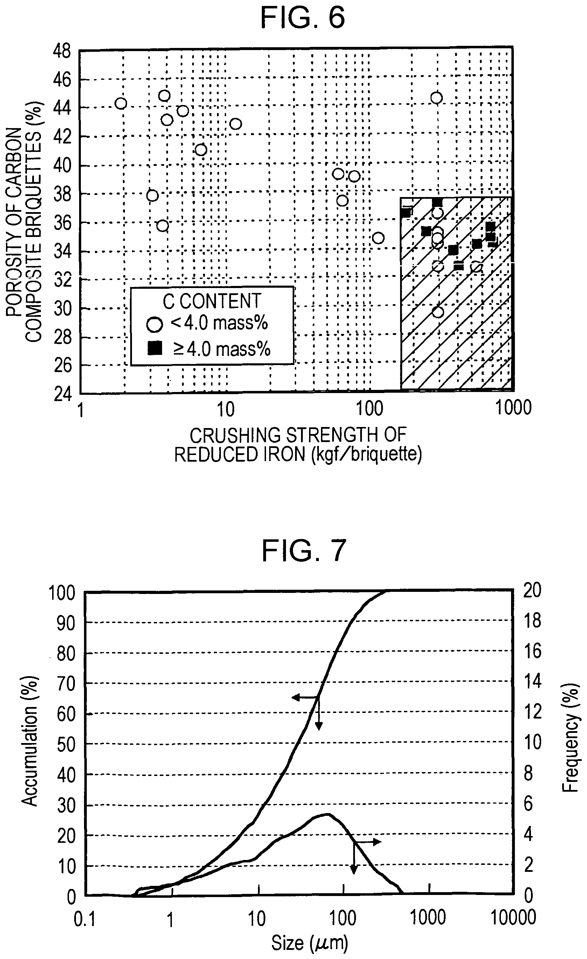

Fig. 6 illustrates the relationship between the porosity of carbon composite briquettes and the crushing strength of reduced iron. As illustrated in Fig. 6, there is a very strong correlation between the porosity of carbon composite briquettes and the crushing strength of reduced iron regardless of the C content of reduced iron.

Accordingly, as illustrated in Fig. 6, by controlling the porosity of carbon composite briquettes to be 37.5% or less, reduced iron having a high crushing strength of 180 kgf/briquette (about 1760 N/briquette) or more can be produced with certainty regardless of the C content.

By making the porosity of carbon composite briquettes be the predetermined value or less, the distance between iron oxide grains in the carbon composite briquettes becomes short and bonding of metallic iron grains (sintering of metallic iron) after reduction is promoted, which probably results in a further increase in the strength of reduced iron.

When the porosity of carbon composite briquettes is made excessively low, bursting tends to occur during reduction. Accordingly, the lower limit of the porosity is preferably 25%.

The porosity of carbon composite briquettes is calculated from the apparent density and true density of carbon composite briquettes:

$$\text{Porosity (\%)} = (1 - [\text{apparent density}]/[\text{true density}]) \times 100$$

where the apparent density of carbon composite briquettes represents the measurement value of the apparent density of dry briquettes; and the true density of carbon composite briquettes represents a weighted average value of true densities of individual materials forming carbon composite briquettes in terms of blending proportions.

In the case of using ironmaking dust as a material, since ironmaking dust has a very small grain size, it may be difficult to compact ironmaking dust. Depending on the type or blending proportion of ironmaking dust used, there are cases where it is difficult to make the porosity of carbon composite briquettes be 37.5% or less by standard forming techniques. In such cases, for example, the following technique may be employed (refer to Japanese Unexamined Patent Application Publication No. 2009-7667): under size after compaction with a briquetting machine is mixed as a recycled material with a new material and returned to the briquetting machine to compact the material to thereby increase the apparent density (that is, decrease the porosity) of carbon composite briquettes.

(Embodiment 3)

The Embodiments 1 and 2 above describe examples in which the grain size of a carbonaceous material contained in the carbon composite briquettes is not particularly limited. By making the grain size of such a carbonaceous material be in a specific range, the crushing strength of a reduced iron product obtained by reducing the carbon composite briquettes is ensured and the amount of carbon remaining in the reduced iron can be further increased.

Specifically, the average grain size d50 of a carbonaceous material in carbon composite briquettes measured by a laser diffraction scattering grain size distribution measurement method is preferably made 30 $\mu$m or less (more preferably, 10 $\mu$m or less).

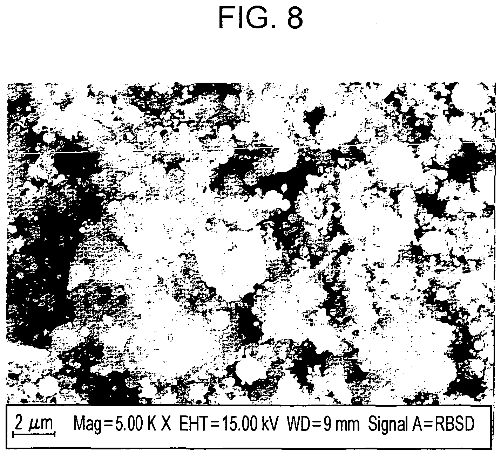

For example, blast-furnace wet dust containing a large amount of carbon grains derived from coke powder or pulverized coal is used as ironmaking dust and the carbon grains of the blast-furnace wet dust are used as a carbonaceous material to prepare carbon composite briquettes. As for reduced iron obtained by reducing such carbon composite briquettes, it has been found that the amount of carbon remaining in the reduced iron can be made high while the crushing strength is ensured. The grain size distribution of the blast-furnace wet dust was measured by a laser diffraction scattering grain size distribution measurement method and the grain size distribution illustrated in Fig. 7 was obtained. Fig. 8 illustrates the blast-furnace wet dust observed with a scanning electron microscope. In Fig. 8, large angular grains are identified as iron oxide; spherical grains are identified as CaO-SiO$_2$-FeO slag; as for carbon, which is a light element, carbon grains cannot be identified; however, grains other than the large iron oxide grains are fine grains and hence carbon grains are probably fine grains. In summary, it is clear that the grain size of carbon grains is at least equal to or less than the grain size of the entirety of the blast-furnace wet dust (the average grain size d50 is 30 $\mu$m) in Fig. 7; and, from the observation result with a scanning electron microscope in Fig. 8, the grain size of carbon grains is probably 10 $\mu$m or less in terms of average grain size d50.

Accordingly, the average grain size d50 of a carbonaceous material in carbon composite briquettes measured by a laser diffraction scattering grain size distribution measurement method is preferably 30 $\mu$m or less, more preferably 10 $\mu$m or less.

The average grain size d50 of a carbonaceous material in carbon composite briquettes may be adjusted, for example, in the following manner. When blast-furnace wet dust is used as a portion of materials, the blending proportion of the dust is adjusted. When coal powder or coke powder is added as a carbonaceous material, the pulverization grain size of such a powder is adjusted.

(Modification)

In the above-described embodiments, as an example of the agglomerate form of carbon composite agglomerates, briquettes are described. Alternatively, pellets may be employed.

In the above-described embodiments, as an example of the furnace type of a moving hearth furnace, a rotary hearth furnace is described. Alternatively, a straight hearth furnace may be employed.

While the present invention has been described in detail and with reference to specific embodiments thereof, it will be apparent to one skilled in the art that various changes and modifications can be made therein without departing from the scope thereof.

This application is based on Japanese Patent Application No. 2009-169719 filed on July 21, 2009.

The present invention is advantageous as a technique of producing reduced iron from ironmaking dust in ironmaking equipment.

## Claims

1. A carbon composite agglomerate for producing reduced iron, the carbon composite agglomerate being used as a material for a moving hearth furnace for producing reduced iron, wherein, in the carbon composite agglomerate, a total content of $SiO_2$, $Al_2O_3$, CaO, and MgO is 7 to 15 mass%, a MgO content is 0.1 to 6 mass%, a mass ratio of $Al_2O_3/SiO_2$ is 0.34 to 0.52, a mass ratio of $CaO/SiO_2$ is 0.25 to 1.5, and a C content Xc is set with the following formula (1) such that 1 to 9 mass% of C remains in reduced iron produced from the carbon composite agglomerate:

$$Xc = XcT + XcR \qquad (1)$$

   where $XcT = (12/16) \cdot Xo$; XcT represents a theoretical C amount necessary for completely reducing iron oxide and zinc oxide in the carbon composite agglomerate to the metals; XcR represents the amount of C remaining in reduced iron when the iron oxide and zinc oxide have been completely reduced to the metals with the theoretical C amount XcT; and Xo represents the total amount of oxygen of iron oxide and oxygen of zinc oxide in the carbon composite agglomerate.

2. The carbon composite agglomerate for producing reduced iron according to Claim 1, having a porosity of 37.5% or less.

3. The carbon composite agglomerate for producing reduced iron according to Claim 1 or 2, wherein an average grain size d50 of a carbonaceous material in the carbon composite agglomerate measured by a laser diffraction scattering grain size distribution measurement method is 30 $\mu$m or less.

4. The carbon composite agglomerate for producing reduced iron according to any one of Claims 1 to 3, at least containing ironmaking dust.

5. A method for producing reduced iron by reducing the carbon composite agglomerate for producing reduced iron according to any one of Claims 1 to 4, through heating with a moving hearth furnace, wherein the moving hearth furnace is divided into a plurality of zones in a moving direction of a hearth and a final zone of the plurality of zones has an oxidizing atmosphere.

6. The method for producing reduced iron according to Claim 5, wherein the oxidizing atmosphere of the final zone has a gas oxidation degree OD of 1.0 or more, and

$$OD = (CO_2 + H_2O + 2O_2)/(CO_2 + H_2O + O_2 + CO + H_2)$$

   [where a unit of $CO_2$, $H_2O$, $O_2$, CO, and $H_2$ is vol%].

**Patentansprüche**

1. Kohlenstoffverbundagglomerat zur Herstellung von reduziertem Eisen, wobei das Kohlenstoffverbundagglomerat als Material für einen Ofen mit einem beweglichen Herd zur Herstellung von reduziertem Eisen verwendet wird, wobei in dem Kohlenstoffverbundagglomerat ein Gesamtgehalt an $SiO_2$ $Al_2O_3$, CaO und MgO 7 bis 15 Massen-% beträgt, ein MgO-Gehalt 0,1 bis 6 Massen-% beträgt, ein Massenverhältnis von $Al_2O_3/SiO_2$ 0,34 bis 0,52 beträgt, ein Massenverhältnis von $CaO/SiO_2$ 0,25 bis 1,5 beträgt und ein C-Gehalt Xc mit der folgenden Formel (1) derart eingestellt ist, dass 1 bis 9 Massen-% von C in dem von dem Kohlenstoffverbundagglomerat hergestellten reduzierten Eisen verbleiben:

$$Xc = XcT + XcR \qquad (1)$$

wobei XcT = (12/16) · Xo; XcT eine theoretische Menge an C darstellt, die notwendig ist, um Eisenoxid und Zinkoxid in dem Kohlenstoffverbundagglomerat vollständig zu den Metallen zu reduzieren; XcR die Menge an C darstellt, die im reduziertem Eisen verbleibt, falls das Eisenoxid und Zinkoxid mit der theoretischen Menge an C XcT vollständig zu den Metallen reduziert wurden; und Xo die Gesamtmenge an Sauerstoff von Eisenoxid und Sauerstoff von Zinkoxid in dem Kohlenstoffverbundagglomerat darstellt.

2. Kohlenstoffverbundagglomerat zur Herstellung von reduziertem Eisen nach Anspruch 1, das eine Porosität von 37,5% oder weniger aufweist.

3. Kohlenstoffverbundagglomerat zur Herstellung von reduziertem Eisen nach Anspruch 1 oder 2, wobei eine mittlere Korngröße d50 von einem kohlenstoffhaltigen Material in dem Kohlenstoffverbundagglomerat, gemessen durch Laserbeugungs-Partikelgrößenverteilungsanalyse, 30 $\mu$m oder weniger beträgt.

4. Kohlenstoffverbundagglomerat zur Herstellung von reduziertem Eisen nach einem der Ansprüche 1 bis 3, das zumindest eisenerzeugenden Staub enthält.

5. Verfahren zur Herstellung von reduziertem Eisen durch das Reduzieren des Kohlenstoffverbundagglomerats zur Herstellung von reduziertem Eisen nach einem der Ansprüche 1 bis 4 durch das Erwärmen mit einem Ofen mit einem beweglichen Herd, wobei der Ofen mit einem beweglichen Herd in einer Bewegungsrichtung eines Herds in eine Mehrzahl an Zonen unterteilt ist und eine letzte Zone von der Mehrzahl an Zonen eine oxidierende Atmosphäre aufweist.

6. Verfahren zur Herstellung von reduziertem Eisen nach Anspruch 5, wobei die oxidierende Atmosphäre der letzten Zone einen Gasoxidationsgrad OD von 1,0 oder mehr aufweist und

$$OD = (CO_2 + H_2O + 2O_2)/(CO_2 + H_2O + O_2 + CO + H_2)$$

[worin eine Einheit von $CO_2$, $H_2O$, $O_2$, CO und $H_2$ Vol.-% ist].

**Revendications**

1. Agglomérat composite à base de carbone pour produire du fer réduit, l'agglomérat composite à base de carbone étant utilisé comme matériau pour un four à sole mobile pour produire du fer réduit, dans lequel, dans l'agglomérat composite à base de carbone, une teneur totale en $SiO_2$, $Al_2O_3$, CaO et MgO est de 7 à 15 % en masse, une teneur en MgO est de 0,1 à 6 % en masse, un rapport en masse $Al_2O_3/SiO_2$ est de 0,34 à 0,52, un rapport en masse $CaO/SiO_2$ est de 0,25 à 1,5, et une teneur en C Xc est établie avec la formule (1) suivante de façon que 1 à 9 % en masse de C restent dans le fer réduit produit à partir de l'agglomérat composite à base de carbone :

$$Xc = XcT + XcR \qquad (1)$$

où XcT = (12/16) · Xo ; XcT représente une quantité théorique de C nécessaire pour réduire complètement l'oxyde de fer et l'oxyde de zinc dans l'agglomérat composite à base de carbone pour obtenir les métaux ; XcR représente la quantité de C qui reste dans le fer réduit quand l'oxyde de fer et l'oxyde de zinc ont été complètement réduits pour obtenir les métaux avec la quantité théorique de C XcT ; et Xo représente la quantité totale d'oxygène de l'oxyde de fer et d'oxygène de l'oxyde de zinc dans l'agglomérat composite à base de carbone.

2. Agglomérat composite à base de carbone pour produire du fer réduit selon la revendication 1, présentant une porosité de 37,5 % ou moins.

3. Agglomérat composite à base de carbone pour produire du fer réduit selon la revendication 1 ou 2, dans lequel une taille moyenne de grain d50 d'un matériau carboné dans l'agglomérat composite à base de carbone mesurée par un procédé de mesure de distribution de tailles de grain par diffusion diffractive laser est de 30 $\mu$m ou moins.

4. Agglomérat composite à base de carbone pour produire du fer réduit selon l'une quelconque des revendications 1 à 3, contenant au moins une poussière de production de fer.

5. Procédé de production de fer réduit par la réduction de l'agglomérat composite à base de carbone pour produire du fer réduit selon l'une quelconque des revendications 1 à 4, par chauffage avec un four à sole mobile, dans lequel le four à sole mobile est divisé en une pluralité de zones dans une direction de déplacement d'une sole et une zone finale de la pluralité de zones présente une atmosphère oxydante.

6. Procédé de production de fer réduit selon la revendication 5, dans lequel l'atmosphère oxydante de la zone finale présente un degré d'oxydation de gaz DO de 1,0 ou plus, et

$$DO = (CO_2 + H_2O + 2O_2/(CO_2 + H_2O + O_2 + CO + H_2)$$

[où une unité de $CO_2$, $H_2O$, $O_2$, CO et $H_2$ est un % en volume].

# FIG. 1

# FIG. 2

# FIG. 3

A: Al<sub>2</sub>O<sub>3</sub>
C: CaO
W: FeO
S: SiO<sub>2</sub>

# FIG. 4

(a)

BRIQUETTE
SURFACE

100 μm

(b)

- - BRIQUETTE
SURFACE

WUSTITE
GRAINS

100 μm

# FIG. 5

# FIG. 6

# FIG. 7

## FIG. 8

2 μm    Mag=5.00 K X  EHT=15.00 kV  WD=9 mm  Signal A=RBSD

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1167546 A1
- US 20060278040 A1
- JP 2004269978 A
- JP 2009035820 A
- JP 2009052138 A
- JP 2009007667 A
- JP 2009169719 A